# EUROPÄISCHE PATENTSCHRIFT

(11) **EP 2 428 671 B1**
(45) Veröffentlichungstag und Bekanntmachung des Hinweises auf die Patenterteilung: **12.10.2016**
(21) Anmeldenummer: 11006052.2
(22) Anmeldetag: 23.07.2011
(51) Int. Cl.: F02D 41/40, F02D 41/10

(54) **Verfahren und Vorrichtung zur Steuerung eines Verbrennungsmotors**
Method and device for controlling a combustion engine
Procédé et dispositif de commande d'un moteur à combustion interne

(30) Priorität: 13.09.2010 DE 102010045083
(43) Veröffentlichungstag der Anmeldung: 14.03.2012
(73) Patentinhaber: Volkswagen Aktiengesellschaft, 38440 Wolfsburg (DE)
(72) Erfinder: Bunsen, Eike, 38518 Gifhorn (DE); Schultalbers, Matthias, 38536 Meinersen/Ahnsen (DE); Fink, Rene, 23966 Wismar (DE); Magnor, Olaf, 38104 Braunschweig (DE); Schintzel, Kay, 38162 Destedt (DE)

(56) Entgegenhaltungen:
- EP-A2- 0 641 925
- EP-A2- 1 164 274
- DE-A1- 3 540 813
- JP-A- S6 193 255
- US-B1- 7 475 671

## Beschreibung

Die vorliegende Erfindung betrifft ein Verfahren zur Steuerung eines Ottomotors in einem Antriebsstrang eines Kraftfahrzeugs, sowie eine entsprechend ausgestaltete Vorrichtung.

In dem Antriebsstrang eines Kraftfahrzeugs können verschiedenartige Verbrennungsmotoren zum Einsatz kommen, z.B. Ottomotoren oder Dieselmotoren. Der Verbrennungsmotor ermöglicht hierbei, durch Verbrennung eines Kraftstoffs gewonnene Energie zum Antrieb des Kraftfahrzeugs zu nutzen. Beispiele von Verbrennungsmotoren sind Ottomotoren, welche mit Benzin betrieben werden, sowie Dieselmotoren, welche mit Dieselkraftstoff betrieben werden.

Um einen effizienten Betrieb des Verbrennungsmotors zu gewährleisten, können elektronische Steuerungen zum Einsatz kommen. Beispielsweise kann eine solche Steuerung eingesetzt werden, um einen Einspritzvorgang des Kraftstoffs in einen Brennraum des Verbrennungsmotors zu steuern.

In diesem Zusammenhang beschreibt die DE 10 2008 001 992 A1 ein Verfahren zur Steuerung des Einspritzvorgangs bei einem Dieselmotor, durch welches ein verringerter Schadstoffausstoß in Form von Russpartikeln erreicht werden kann. Das Verfahren basiert auf einer Anpassung des Verbrennungsverlaufs über den Einspritzdruck.

Aus der DE 10 2008 004 361 A1 ist es bekannt, den Verbrennungsverlauf eines selbstzündenden Ottomotors über die Auswertung verschiedener Verbrennungslagemerkmale anzupassen. Bei den Verbrennungslagemerkmalen kann es sich beispielsweise um die Lage des maximalen Verbrennungsdrucks, die Lage der 50%-Energieumsetzung oder dergleichen handeln.

Aus der DE 3930396 A1, der JP 60019943 A und der JP 60032961 A sind jeweils Verfahren bekannt, bei welchen der Verbrennungsverlauf über die Menge des eingespritzten Kraftstoffs angepasst wird.

Aus der DE 10249755 A1, der DE 10344423 A1, der DE 10344428 A1 und der DE 10 2007 052 615 A1 sind Verfahren bekannt, bei welchen der Verbrennungsverlauf über eine Aufteilung des Einspritzvorgangs in eine Voreinspritzung und Haupteinspritzung bzw. in eine Haupteinspritzung und eine Nacheinspritzung erreicht wird.

Aus der US 7 475 671, der JP S61 93255 A und der EP 0641 925 A2 sind Verfahren bekannt, bei welchen die Steuerung eines Einspritzzeitpunkts eines Verbrennungsmotors in Abhängigkeit von der erfassten zeitlichen Änderung des wenigstens einen Betriebsparameter erfolgt. Hierzu soll im transienten Betrieb der Einspritzwinkel entsprechend verändert werden.

Eine Aufgabe der vorliegenden Erfindung besteht darin, Verfahren sowie Vorrichtungen zur Steuerung eines Verbrennungsmotors bereitzustellen, durch welche auf effiziente Weise Partikelemissionen beim Betrieb des Verbrennungsmotors reduziert werden können.

Erfindungsgemäß wird diese Aufgabe gelöst durch ein Verfahren gemäß Anspruch 1 sowie durch eine Vorrichtung gemäß Anspruch 9. Die abhängigen Ansprüche definieren bevorzugte oder vorteilhafte Ausführungsformen der Erfindung.

Bei der vorliegenden Erfindung wird bei einem Verbrennungsmotor der Verbrennungsverlauf über den Einspritzzeitpunkt, mitunter auch als Einspritzwinkel bezeichnet, gesteuert. Insbesondere ist vorgesehen, dass wenigstens ein Betriebsparameter des Verbrennungsmotors überwacht wird, um eine zeitliche Änderung des wenigstens einen Betriebsparameters zu erfassen, welche einen Dynamikschwellenwert übersteigt. Es wird somit für einen oder mehrere Betriebsparameter eine Dynamik, d.h. eine schnelle zeitliche Änderung des Betriebsparameters, erfasst. Der Einspritzzeitpunkt des Verbrennungsmotors wird dann in Abhängigkeit von der erfassten Dynamik gesteuert. Auf diese Weise wird ermöglicht, Partikelemissionen aufgrund von durch die Dynamik hervorgerufenen instationären Betriebszuständen zu reduzieren. Bei dem überwachten Betriebsparameter kann es sich beispielsweise um eine Drehzahl und/oder eine Last des Verbrennungsmotors handeln. Die Last des Verbrennungsmotors kann beispielsweise durch eine relative Füllung eines Brennraums oder einen Saugrohrdruck beschrieben sein.

Gemäß einem bevorzugten Ausführungsbeispiel der Erfindung wird der Einspritzzeitpunkt abhängig von wenigstens einem Betriebsparameter geregelt, z.B. auf Grundlage eines Kennfelds. Auf diese Weise kann für verschiedene stationäre Betriebszustände jeweils ein geeigneter Einspritzzeitpunkt gewählt werden. Wenn jedoch eine Dynamik erfasst wird, wird der durch die Regelung bestimmte Einspritzzeitpunkt für eine Haltezeit beibehalten bzw. eingefroren. Auf diese Weise kann erreicht werden, dass beim Übergang zwischen zwei stationären Betriebszuständen der Einspritzzeitpunkt nicht anhand der Regelung nachgeführt wird, sondern zunächst bei seinem vor Auftreten der Dynamik eingestellten Wert verbleibt. Die Regelung des Einspritzzeitpunkts kann dann fortgeführt werden, sobald sich wieder ein stationärer Betriebszustand eingestellt hat. Diese Maßnahme trägt dem Umstand Rechnung, dass die Regelung typischerweise nicht für instationäre Betriebszustände optimiert ist und folglich Einspritzzeitpunkte liefern kann, welche zu unnötig hohen Partikelemissionen führen. Es hat sich gezeigt, dass durch eine vergleichsweise einfache Maßnahme, d.h. das Einfrieren des Einspritzzeitpunkts, gegenüber der kontinuierlichen Regelung des Einspritzzeitpunkts auf Grundlage eines stationären Kennfelds reduzierte Partikelemissionen erreicht werden können.

Vorzugsweise ist die Haltezeit länger als eine Dynamikzeit, in welcher der überwachte Betriebsparameter bzw. die überwachten Betriebsparameter den Dynamikschwellenwert übersteigen. Auf diese Weise wird sichergestellt, dass die Regelung des Einspritzzeitpunkts erst dann fortgeführt wird, wenn sich ein stationärer Betriebszustand des Verbrennungsmotors eingestellt hat. In diesem Zusammenhang ist es besonders vorteilhaft, wenn die Haltezeit in Abhängigkeit wenigstens eines Betriebsparameters des Verbrennungsmotors eingestellt wird, so dass die Regelung des Einspritzzeitpunkts möglichst frühzeitig fortgeführt werden kann. Der Betriebsparameter, in dessen Abhängigkeit die Haltezeit eingestellt wird, kann derselbe sein, welcher zur Erfassung der Dynamik überwacht wird, z.B. eine Drehzahl und/oder eine Last des Verbrennungsmotors.

Bei einem bevorzugten Ausführungsbeispiel kann darüber hinaus noch eine Differenz zwischen dem eingefrorenen beibehaltenen Einspritzzeitpunkt und einem momentan durch die Regelung bestimmten Einspritzzeitpunkt bestimmt werden und mit einem Differenzschwellenwert verglichen werden. In Abhängigkeit von dem Vergleich kann dann das Einfrieren des Einspritzzeitpunkts beendet werden. Auf diese Weise kann eine zu starke Abweichung des eingefrorenen Einspritzzeitpunkts von dem momentan durch die Regelung bestimmten Einspritzzeitpunkt und damit einhergehende Störungen im Betrieb des Verbrennungsmotors vermieden werden.

Gemäß einem bevorzugten Ausführungsbeispiel ist weiterhin vorgesehen, die Steuerung des Einspritzzeitpunkts in Abhängigkeit von einem Vorzeichen der erfassten zeitlichen Änderung des wenigstens einen Betriebsparameters vorzunehmen, d.h. zwischen einer positiven und einer negativen Dynamik zu unterscheiden. Beispielsweise kann die Haltezeit bei einer positiven Dynamik anders gewählt sein als bei einer negativen Dynamik.

Weiterhin werden eine Vorrichtung zur Steuerung eines Verbrennungsmotors, welche zur Durchführen des erfindungsgemäßen Verfahrens ausgestaltet ist, sowie ein Kraftfahrzeug mit einer solchen Vorrichtung bereitgestellt.

Im Folgenden wird ein Ausführungsbeispiel der Erfindung anhand der beigefügten Zeichnungen näher erläutert.
Fig. 1 zeigt schematisch ein Kraftfahrzeug, bei welchem in einem Antriebsstrang die Steuerung eines Einspritzzeitpunkts gemäß einem Ausführungsbeispiel der Erfindung verwirklicht ist.
Fig. 2 zeigt schematisch den Aufbau einer Vorrichtung zur Steuerung des Einspritzzeitpunkts gemäß einem Ausführungsbeispiel der Erfindung.
Fig. 3 zeigt schematisch den Aufbau einer Vorrichtung zur Dynamikerfassung, welche in der Vorrichtung von Fig. 2 zum Einsatz kommen kann.
Fig. 4 zeigt ein Flussdiagramm zur Veranschaulichung eines erfindungsgemäßen Verfahrens zur Steuerung des Einspritzzeitpunkts.
Fig. 5 zeigt beispielhafte Simulationsergebnisse zur Veranschaulichung der Wirkungsweise der Erfindung.

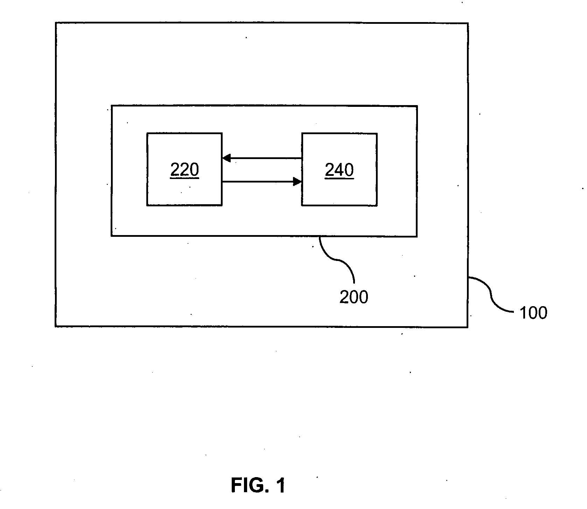

Die nachfolgende Beschreibung eines Ausführungsbeispiels bezieht sich auf die Steuerung eines Verbrennungsmotors in einem Kraftfahrzeug 100. Fig. 1 veranschaulicht zur Erläuterung der Erfindung einige Komponenten des Kraftfahrzeugs 100. Insbesondere zeigt Fig. 1 einen Antriebsstrang 200 des Kraftfahrzeugs, welcher den Verbrennungsmotor 220 sowie eine Motorsteuerung 240 umfasst.

Der Verbrennungsmotor 220 des Antriebsstrangs 200 hat die Aufgabe, durch Verbrennung eines Kraftstoffs gewonnene Energie in mechanische Antriebsenergie zum Antrieb des Kraftfahrzeugs 100 umzusetzen. Bei dem dargestellten Ausführungsbeispiel handelt es sich bei dem Verbrennungsmotor 220 um einen Ottomotor, welcher mit Benzin als Kraftstoff betrieben wird. Die Motorsteuerung 240 steuert den Verbrennungsablauf in dem Verbrennungsmotor 220. Dazu ist die Motorsteuerung 240 insbesondere dazu ausgestaltet, einen Einspritzvorgang des Kraftstoffes in einem Brennraum des Verbrennungsmotors 220 zu steuern. Die nachfolgend beschriebenen Konzepte beruhen speziell darauf, einen Einspritzzeitpunkt des Kraftstoffes in den Brennraum zu steuern. Der Einspritzzeitpunkt definiert den Beginn der Einspritzung des Kraftstoffs in den Brennraum und wird mitunter auch über einen Einspritzwinkel definiert. Der Ausdruck "Einspritzwinkel" trägt der zyklischen Wiederholung des Einspritzvorgangs Rechnung und definiert den Zeitpunkt des Einspritzbeginns innerhalb eines Einspritzzyklus. Ein vollständiger Einspritzzyklus entspricht dabei einem Winkel von 360°, und das Verhältnis der Zeitspanne zwischen Beginn des Einspritzzyklus und dem Einspritzzeitpunkt zu der Gesamtdauer des Einspritzzyklus entspricht dem Verhältnis des Einspritzwinkels zu 360°. Neben dem Einspritzzeitpunkt bzw. Einspritzwinkel kann die Motorsteuerung 240 selbstverständlich auch weitere Betriebsgrößen des Verbrennungsmotors 220 steuern, z.B. Einspritzmenge, Einspritzdauer oder dergleichen. Die Motorsteuerung 240 ist bei dem dargestellten Ausführungsbeispiel im Wesentlichen elektronisch realisiert.

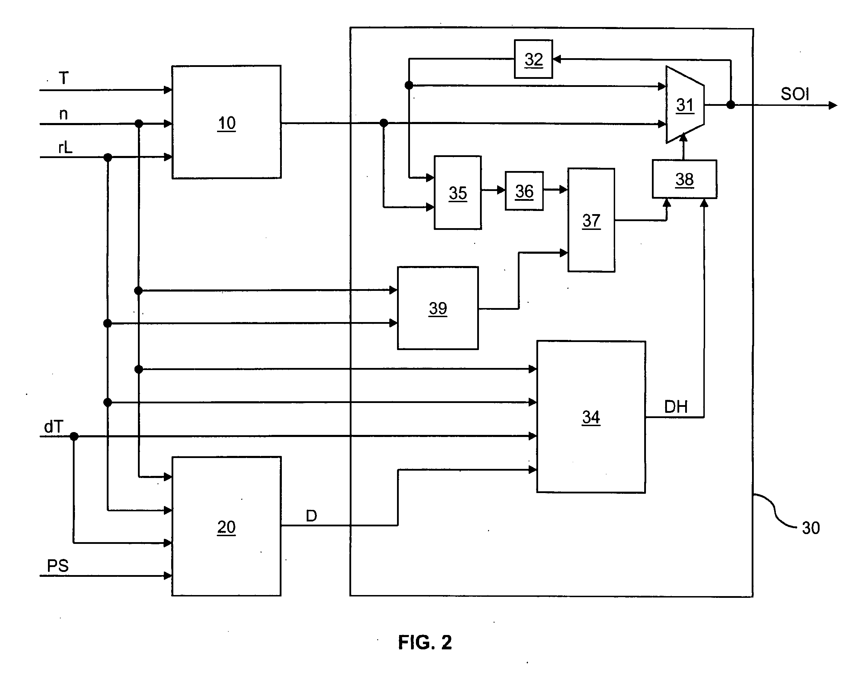

Fig. 2 veranschaulicht schematisch den Aufbau der Motorsteuerung 240. Wie dargestellt, umfasst die Motorsteuerung 240 ein Regelungsmodul 10 zur Regelung des Einspritzwinkels SOI in Abhängigkeit von Betriebsparametern des Verbrennungsmotors 220, ein Überwachungmodul 20 und ein Steuerungsmodul 30. Bei dem dargestellten Ausführungsbeispiel handelt es sich bei diesen Betriebsparametern um eine Temperatur T in dem Brennraum, um eine Drehzahl n des Verbrennungsmotors 220 und um eine relative Füllung rL des Brennraums. Diese Parameter werden dem Regelungsmodul 10 als Eingangsgrößen zugeführt. Anhand eines stationären Kennfeldes bestimmt das Regelungsmodul 10 einen stationär geregelten Wert für den Einspritzwinkel. Darüber hinaus sind ein Überwachungsmodul 20 sowie ein Steuerungsmodul 30 vorgesehen. Der durch das Regelungsmodul 10 bestimmte Wert für den Einspritzzeitpunkt wird dem Steuerungsmodul 30 als Eingangsgröße zugeführt.

Das Überwachungsmodul 20 nimmt als Eingangsgrößen die Drehzahl n sowie die relative Füllung rL auf. Darüber hinaus werden dem Überwachungsmodul 20 als Eingangsgrößen ein Saugrohrdruck PS sowie ein Zeitintervall dT zugeführt. Bei dem Saugrohrdruck PS handelt es sich um eine durch Sensoren erfasste Messgröße, welche die momentane Last des Verbrennungsmotors 220 widerspiegelt. Die relative Füllung rL entspricht ebenfalls der momentanen Last des Verbrennungsmotors 220. Die relative Füllung rL wird jedoch typischerweise nicht anhand von Sensoren erfasst, sondern beispielsweise anhand einer Gaspedalstellung als Sollgröße bestimmt. Das Überwachungsmodul 20 ist dazu ausgestaltet, Betriebsparameter des Verbrennungsmotors 220 zu überwachen. Insbesondere werden die Drehzahl n sowie die Last des Verbrennungsmotors 220 zur Erfassung einer Dynamik überwacht. Als Dynamik ist in diesem Zusammenhang eine zeitliche Änderung eines überwachten Betriebsparameters zu verstehen, welche einen Dynamikschwellenwert übersteigt. Bei dem dargestellten Ausführungsbeispiel wird eine Drehzahldynamik erfasst, wenn die zeitliche Änderung der Drehzahl n in dem Zeitintervall dT einen Drehzahldynamikschwellenwert überschreitet. Ebenso wird eine Lastdynamik erfasst, wenn die Änderung des Saugrohrdrucks PS in dem Zeitintervall dT einen Lastdynamikschwellenwert übersteigt. Der Drehzahldynamikschwellenwert und/oder der Lastdynamikschwellenwert können anhand der weiteren Eingangsgrößen des Überwachungsmoduls 20 bestimmt sein, d.h. anhand der Drehzahl n und/oder der relativen Füllung rL. Bei Erfassen einer Dynamik, z.B. einer Drehzahldynamik und/oder einer Lastdynamik, gibt das Überwachungsmodul 20 ein Dynamiksignal D aus, welches das Vorliegen der erfassten Dynamik anzeigt. Dies kann beispielsweise durch Setzen eines Dynamikbits in einem digitalen Signal erfolgen. Das Dynamiksignal D kann darüber hinaus noch weitere Eigenschaften der erfassten Dynamik anzeigen. So kann das Dynamiksignal D beispielsweise anzeigen, ob es sich um eine Drehzahldynamik oder eine Lastdynamik handelt. Weiterhin können auch ein Vorzeichen der Dynamik und/oder eine Stärke der Dynamik angezeigt werden. Das Dynamiksignal D wird dem Steuerungsmodul 30 zugeführt.

Das Steuerungsmodul 30 ist dazu ausgestaltet, die weitere Verarbeitung des durch das Regelungsmodul 10 bestimmten Werts für den Einspritzzeitpunkt in Abhängigkeit von dem Dynamiksignal D zu steuern. Insbesondere ist das Steuerungsmodul 30 derart ausgestaltet, dass es im Fall einer Dynamik den momentan durch das Regelungsmodul 10 bestimmten Einspritzwinkel für eine bestimmte Haltezeit beibehalten kann. Der am Ausgang des Steuerungsmoduls 30 gelieferte Eirispritzwinkel SOI wird somit für die Haltezeit "eingefroren". Zu diesem Zweck wird in dem Steuerungsmodul 30 der durch das Regelungsmodul 10 bestimmte Einspritzwinkel einem Multiplexer 31 zugeführt. Das Ausgangssignal des Multiplexers 31 zeigt den durch den Verbrennungsmotor 220 zu verwendenden Einspritzwinkel SOI an. Das Ausgangssignal des Multiplexers 31 ist weiterhin einem Signalspeicher 32 zugeführt, dessen Ausgangssignal dem Multiplexer 31 als weiteres Eingangssignal zugeführt ist. Mittels des Multiplexers 31 kann somit gesteuert werden, ob der durch das Regelungsmodul 10 bestimmte Einspritzwinkel oder der in dem Signalspeicher 32 gespeicherte Einspritzwinkel als durch den Verbrennungsmotor 220 zu verwendender Einspritzwinkel SOI ausgegeben werden soll.

Zur Bestimmung eines Steuersignals für den Multiplexer 31 anhand des Dynamiksignals D umfasst das Steuerungsmodul 30 ein Haltezeitmodul 34, welchem das Dynamiksignal D als Eingangssignal zugeführt ist. Als weitere Eingangssignale nimmt das Haltezeitmodul 34 die Drehzahl n des Verbrennungsmotors, die relative Füllung rL des Verbrennungsmotors sowie das Zeitintervall dT auf. Anhand dieser Eingangsgrößen bestimmt das Haltezeitmodul 34 bei Vorliegen einer Dynamik eine geeignete Haltezeit und erzeugt als Ausgangssignal DH ein Logiksignal, welches bei Erfassen der Dynamik für die Haltezeit auf einen hohen Wert gesetzt wird. Dieses Ausgangssignal DH des Haltezeitmoduls 34 wird über ein UND-Logikgatter 38 dem Multiplexer 31 als Steuersignal zugeführt.

Bei dem dargestellten Ausführungsbeispiel umfasst das Steuerungsmodul 30 darüber hinaus noch einen Vergleichszweig mit einem Differenzelement 35, einem Betragselement 36 sowie einem Komparatorelement 37. Das Differenzelement 35 nimmt als Eingangsgrößen den in dem Signalspeicher 32 gespeicherten Einspritzwinkel sowie den durch das Regelungsmodul 10 bestimmten Einspritzwinkel auf und bildet deren Differenz, welche dem Betragselement 36 zugeführt wird. Das Betragselement 36 bildet den Betrag der Differenz und führt diesen dem Komparatormodul 37 zu. Das Komparatormodul 37 vergleicht den Betrag der Differenz mit einem Differenzschwellenwert und erzeugt als Ausgangssignal ein Logiksignal mit einem hohen Wert, solange der Betrag den Schwellenwert nicht überschreitet. Das Ausgangssignal des UND-Logikgatters 38 ist folglich ein Logiksignal mit einem hohen Wert, wenn bei vorliegender Dynamik die Haltezeit andauert und darüber hinaus die Differenz zwischen dem in dem Signalspeicher 32 gespeicherten Einspritzwinkel und dem momentan durch das Regelungsmodul bestimmten Einspritzwinkel den Differenzschwellenwert nicht überschreitet. Für diesen Fall wird der Multiplexer 31 durch das Logiksignal derart gesteuert, dass der in dem Signalspeicher 32 gespeicherte Einspritzwinkel als der durch den Verbrennungsmotor 220 zu verwendende Einspritzwinkel SOI ausgegeben wird. Andernfalls wird der durch das Regelungsmodul 10 bestimmte Einspritzwinkel als der durch den Verbrennungsmotor 220 zu verwendende Einspritzwinkel SOI ausgegeben.

Bei dem dargestellten Ausführungsbeispiel umfasst darüber hinaus das Steuerungsmodul 30 ein Differenzschwellenwertmodul 39, welches den von dem Komparatorelement 37 zu verwendenden Schwellenwert bestimmt. Dem Differenzschwellenwertmodul 39 sind als Eingangsgrößen die Drehzahl n und die relative Füllung rL zugeführt. Der Differenzschwellenwert kann folglich in Abhängigkeit der Drehzahl n und/oder der relativen Füllung bestimmt werden. Alternativ wäre es selbstverständlich auch möglich, einen fest vorgegebenen Differenzschwellenwert zu verwenden.

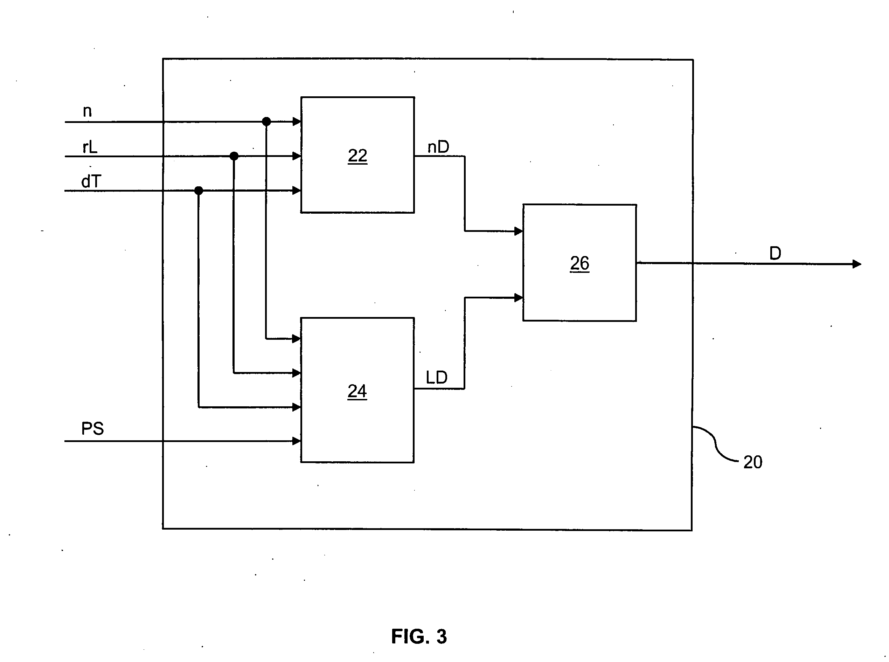

Fig. 3 veranschaulicht schematisch den Aufbau des Überwachungsmoduls 20. Wie dargestellt, umfasst das Überwachungsmodul 20 ein Drehzahldynamikmodul 22 und ein Lastdynamikmodul 24. Dem Drehzahldynamikmodul 22 sind als Eingangsgrößen die Drehzahl n und die relative Füllung rL des Verbrennungsmotors sowie das Zeitintervall dT zugeführt. Das Drehzahldynamikmodul 22 überwacht die Drehzahl n, um darin eine Dynamik zu erfassen. Dies wird erreicht, indem eine Änderung der Drehzahl n in dem Zeitintervall dT mit einem Drehzahldynamikschwellenwert verglichen werden. Der Drehzahldynamikschwellenwert kann dabei abhängig von der Drehzahl n und/oder der relativen Füllung rL bestimmt sein. Wenn eine Drehzahldynamik erfasst wird, d.h. wenn die zeitliche Änderung der Drehzahl n den Drehzahldynamikschwellenwert überschreitet, erzeugt das Drehzahldynamikmodul 220 ein Drehzahldynamiksignal nD, welches das Vorliegen der Drehzahldynamik anzeigt. Das Drehzahldynamiksignal nD kann darüber hinaus auch ein Vorzeichen der Drehzahldynamik und/oder eine Stärke der Drehzahldynamik anzeigen.

Das Lastdynamikmodul 24 nimmt neben den genannten Eingangsgrößen des Drehzahldynamikmoduls 22 als weitere Eingangsgröße den Saugrohrdruck PS auf. Sowohl die relative Füllung rL als auch der Saugrohrdruck PS entsprechen der Last des Verbrennungsmotors 220. Es hat sich jedoch gezeigt, dass der anhand von Sensoren an dem Verbrennungsmotor 220 bestimmte Saugrohrdruck PS eine vorteilhafte Eignung zur Erfassung einer Lastdynamik aufweist. Das Lastdynamikmodul 24 ist das ausgestaltet, eine Lastdynamik zu erfassen, wenn die Änderung des Saugrohrdrucks PS in dem Zeitintervall dT einen Lastdynamikschwellenwert überschreitet. Der Lastdynamikschwellenwert kann wiederum anhand der weiteren Eingangsgrüßen des Lastdynamikmoduls 24, d.h. anhand der Drehzahl n und/oder der relativen Füllung rL bestimmt sein. Das Lastdynamikmodul 24 erzeugt ein Lastdynamiksignal LD, welches das Vorliegen der erfassten Lastdynamik anzeigt. Darüber hinaus kann das Lastdynamiksignal LD auch ein Vorzeichen der erfassten Lastdynamik und/oder eine Stärke der erfassten Lastdynamik anzeigen.

Weiterhin umfasst das Überwachungsmodul 20 ein Logikmodul 26, welchem das Drehzahldynamiksignal nD und das Lastdynamiksignal LD zugeführt sind. Das Logikmodul 26 erzeugt aus dem Drehzahldynamiksignal nD und dem Lastdynamiksignal LD das Dynamiksignal D, welches dem Steuerungsmodul 30 zugeführt wird. Zu diesem Zweck kann das Logikmodul 26 insbesondere eine ODER-Verknüpfung zwischen dem Drehzahldynamiksignal nD und dem Lastdynamiksignal LD bewirken, so dass das Dynamiksignal D eine Dynamik anzeigt, wenn das Drehzahldynamiksignal nD eine Drehzahldynamik anzeigt oder das Lastdynamiksignal LD eine Lastdynamik anzeigt. Darüber hinaus kann das Logikmodul 26 weitere Informationen aus dem Drehzahldynamiksignal nD und/oder dem Lastdynamiksignal LD in das Dynamiksignal D einfügen.

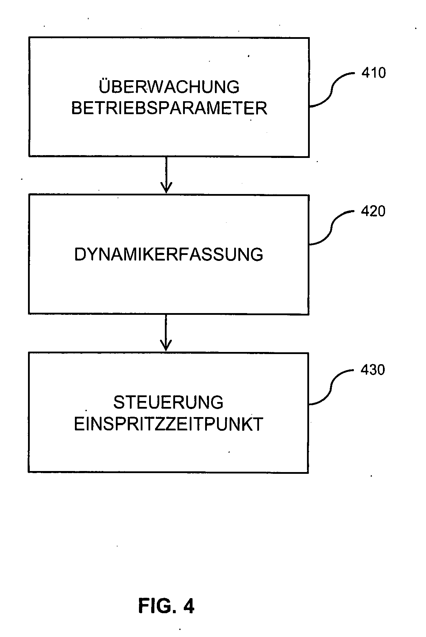

Fig. 4 zeigt ein Flussdiagramm zur Veranschaulichung eines erfindungsgemäßen Verfahrens zur Steuerung eines Verbrennungsmotors, z.B. des Verbrennungsmotors 220, welches auf den zuvor beschriebenen Konzepten beruht. Das Verfahren kann mittels der anhand von Fig. 1-3 erläuterten Motorsteuerung 240 durchgeführt werden.

Bei Schritt 410 werden Betriebsparameter des Verbrennungsmotors überwacht. Dies kann mittels des Überwachungsmoduls 20 geschehen. Bei den überwachten Betriebsparametern kann es sich insbesondere um eine Drehzahl n und/oder eine Last des Verbrennungsmotors handeln. Die Last kann beschrieben sein durch eine relative Füllung eines Brennraums des Verbrennungsmotors und/oder einen Saugrohrdruck des Verbrennungsmotors. Die Betriebsparameter des Verbrennungsmotors werden insbesondere zur Erfassung einer Dynamik überwacht.

Bei Schritt 420 wird eine Dynamik der überwachten Betriebsparameter erfasst, indem festgestellt wird, dass die zeitliche Änderung des überwachten Betriebsparameters einen Dynamikschwellenwert überschreitet. Bei der erfassten Dynamik kann es sich um eine Drehzahldynamik und/oder eine Lastdynamik handeln.

Bei Schritt 430 wird in Abhängigkeit von der erfassten Dynamik der Einspritzzeitpunkt bzw. Einspritzwinkel des Verbrennungsmotors gesteuert. Auf diese Weise können unnötige Partikelemissionen aufgrund einer für instationäre Betriebszustände ungeeigneten Einstellung des Einspritzzeitpunkts vermieden werden. Insbesondere kann wie im Vorangegangenen beschrieben der Einspritzzeitpunkt für eine Haltezeit eingefroren werden, wobei diese Haltezeit wiederum abhängig von Betriebsparametern des Verbrennungsmotors bestimmt sein kann.

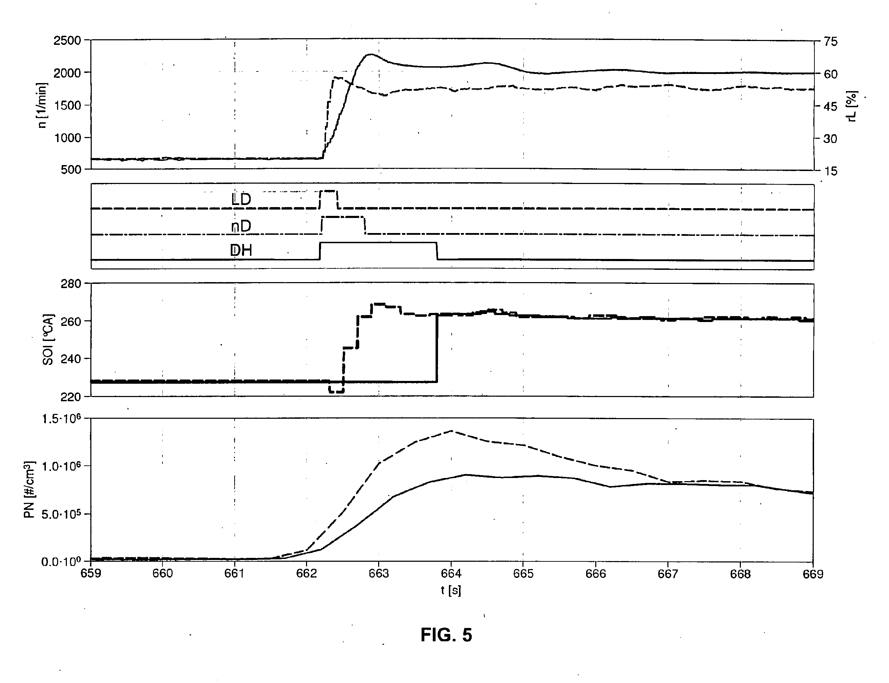

Fig. 5 zeigt beispielhafte Simulationsergebnisse zur Veranschaulichung der Wirkungsweise der dargestellten Konzepte. Insbesondere veranschaulicht Fig. 5 zeitliche Verläufe der Drehzahl n sowie der relativen Füllung rL und daraus abgeleitete Steuersignale sowie eine resultierende Partikelemission PN.

In dem oberen Diagramm von Fig. 5 ist der zeitliche Verlauf der Drehzahl n durch eine durchgezogene Linie dargestellt, während der zeitliche Verlauf der relativen Füllung rL durch eine gestrichelte Linie dargestellt ist. Es ist erkennbar, dass bei einer Zeit t von ungefähr 662,2 s eine Dynamik zu höherer Drehzahl und höherer Last auftritt.

In dem darunter liegenden Diagram ist dargestellt, wie sich dieser Lastsprung in dem Lastdynamiksignal LD, dem Drehzahldynamiksignal nD sowie dem Ausgangssignal DH des Haltezeitmoduls 34 äußert. Es ist erkennbar, dass die Lastdynamik für ein vergleichsweise kurzes Zeitintervall von ca. 0,2 s erfasst wird, wohingegen die Drehzahldynamik für ein etwas längeres Zeitintervall von ca. 0,7 s erfasst wird. Das Ausgangssignal des Haltezeitmoduls 34 bleibt auch nach Erfassen der Drehzahldynamik und Lastdynamik auf einem hohen Wert, bis die Haltezeit von insgesamt ca. 1,7 s abgelaufen ist.

Das darunter liegende Diagramm zeigt den Einspritzwinkel SOI als durchgezogene Linie. Zum Vergleich ist der durch das Regelungsmodul 10 bestimmte Wert als gestrichelte Linie dargestellt. Es ist erkennbar, dass der Einspritzwinkel bei Erfassen der Dynamik eingefroren wird und erst nach Ablauf der Haltezeit wieder den durch das Regelungsmodul 10 bestimmten Wert einnimmt.

Das unterste Diagramm zeigt die Partikelemissionen PN bei Verwendung der hierin beschriebenen Konzepte als durchgezogene Linie. Zum Vergleich sind durch eine gestrichelte Linie die Partikelemissionen ohne Verwendung der beschriebenen Steuerung des Einspritzwinkels, d.h. bei bloßer Verwendung des durch das Regelungsmodul 10 bestimmten Einspritzwinkels, dargestellt. Es ist erkennbar, dass durch die erfindungsgemäßen Konzepte eine deutliche Reduzierung der Partikelemissionen erreicht wird.

Es versteht sich, dass in dem dargestellten Konzepten verschiedene Modifikationen möglich sind. So können andere Betriebsparameter als Grundlage der Regelung und/oder Dynamik abhängigen Steuerung des Einspritzzeitpunkts verwendet werden. Weiterhin kann bei anderen Ausführungsbeispielen auf den hierin beschriebenen Differenzzweig verzichtet werden. Darüber hinaus sind auch vereinfachte Ausführungsbeispiele denkbar, bei welchen Dynamikschwellenwerte und/oder die Haltezeit fest vorgegeben sind.

### Bezugszeichenliste

- 10: Regelungsmodul
- 20: Überwachungsmodul
- 22: Drehzahldynamikmodul
- 24: Lastdynamikmodul
- 26: Logikmodul
- 30: Steuerungsmodul
- 31: Multiplexer
- 32: Signalspeicher
- 34: Haltezeitmodul
- 35: Differenzelement
- 36: Betragselement
- 37: Komparatorelement
- 38: UND-Logikgatter
- 39: Differenzschwellenwertmodul
- 100: Kraftfahrzeug
- 200: Antriebsstrang
- 220: Verbrennungsmotor
- 240: Motorsteuerung
- 410: Überwachungsschritt
- 420: Dynamikerfassungsschritt
- 430: Steuerungsschritt
- D: Dynamiksignal
- dT: Zeitintervall
- DH: Ausgangssignal
- LD: Lastdynamiksignal
- n: Drehzahl
- nD: Drehzahldynamiksignal
- PS: Saugrohrdruck
- rL: relative Füllung
- SOI: Einspritzzeitpunkt

## Patentansprüche

1. Verfahren zur Steuerung eines Ottomotors (220), umfassend:
- Überwachung wenigstens eines Betriebsparameters des Ottomotors (220);
- Erfassen einer zeitlichen Änderung des wenigstens einen Betriebsparameters, welche einen Dynamikschwellenwert übersteigt; und
- Steuerung eines Einspritzzeitpunkts des Ottomotors (220) in Abhängigkeit von der
- erfassten zeitlichen Änderung des wenigstens einen Betriebsparameters
- Regelung des Einspritzzeitpunkts abhängig von dem wenigstens einen Betriebsparameter;
- wenn erfasst wird, dass die zeitliche Änderung des wenigstens einen Betriebsparameters den Dynamikschwellenwert übersteigt, Beibehalten des durch die Regelung bestimmten Einspritzzeitpunkts für eine Haltezeit und
- Fortführen der Regelung des Einspritzzeitpunkts, sobald sich ein stationärer Betriebszustand des Betriebsparameters eingestellt hat.

2. Verfahren nach Anspruch 1,
wobei der wenigstens eine Betriebsparameter des Ottomotors (220), welcher überwacht wird, eine Drehzahl und/oder eine Last des Ottomotors (220) umfasst.

3. Verfahren nach Anspruch 1,
wobei die Haltezeit länger ist als eine Dynamikzeit, in welcher der wenigstens eine Betriebsparameter den Dynamikschwellenwert übersteigt.

4. Verfahren nach Anspruch 2 ; umfassend:
Einstellen der Haltezeit in Abhängigkeit wenigstens eines Betriebsparameters des Ottomotors (220).

5. Verfahren nach Anspruch 4, umfassend:
wobei der wenigstens eine Betriebsparameter, in dessen Abhängigkeit die Haltezeit eingestellt wird, eine Drehzahl und/oder eine Last des Ottomotors (220) umfasst.

6. Verfahren nach einem der Ansprüche 4 oder 5, umfassend:
- Bestimmen einer Differenz zwischen dem beibehaltenen Einspritzzeitpunkt und einem momentan durch die Regelung bestimmten Einspritzzeitpunkt;
- Vergleich der Differenz mit einem Differenzschwellenwert; und
- in Abhängigkeit von dem Vergleich, Beenden des Beibehaltens des Einspritzzeitpunkts.

7. Verfahren nach einem der vorhergehenden Ansprüche,
wobei die Steuerung des Einspritzzeitpunkts in Abhängigkeit von einem Vorzeichen der erfassten zeitlichen Änderung des wenigstens einen Betriebsparameters erfolgt.

8. Vorrichtung zur Steuerung eines Ottomotors (220), umfassend:
ein Überwachungsmodul (20) zur Überwachung wenigstens eines Betriebsparameters des Ottomotors (220), wobei das Überwachungsmodul (20) dazu ausgestaltet ist, eine zeitliche Änderung des wenigstens einen Betriebsparameters zu erfassen, welche einen Dynamikschwellenwert übersteigt;
ein Steuerungsmodul (30), welches dazu ausgestaltet ist, einen Einspritzzeitpunkt des Ottomotors (220) in Abhängigkeit von der erfassten zeitlichen Änderung des wenigstens einen Betriebsparameters zu steuern; und
ein Haltezeitmodul (34), welches eine geeignete Haltezeit beim Vorliegen einer Dynamik bestimmt,
wobei die Vorrichtung zur Durchführung des Verfahrens nach einem der Ansprüche 1 bis 7 ausgestaltet ist.

9. Kraftfahrzeug (100), umfassend:
einen Antriebsstrang (200) mit einem Ottomotor (220); und
eine Vorrichtung (240) zur Steuerung des Ottomotors (220),
wobei die Vorrichtung nach Anspruch 8 ausgestaltet ist.

## Claims

1. Method for controlling a spark-ignition engine (220), comprising:
- monitoring at least one operating parameter of the spark-ignition engine (220);
- detecting a change in the at least one operating parameter over time which exceeds a dynamic threshold value; and
- performing open-loop control of an injection time of the spark-ignition engine (220) as a function of the detected change in the at least one operating parameter over time,
- performing closed-loop control of the injection time as a function of the at least one operating parameter;
- if it is detected that the change in the at least one operating parameter over time exceeds the dynamic threshold value, retaining the injection time determined by the closed-loop control for a holding time, and
- continuing the closed-loop control of the injection time as soon as a steady-state operating state of the operating parameter has become established.

2. Method according to Claim 1,
wherein the at least one operating parameter of the spark-ignition engine (220) which is monitored comprises a rotational speed and/or a load of the spark-ignition engine (220).

3. Method according to Claim 1,
wherein the holding time is longer than a dynamic time in which the at least one operating parameter exceeds the dynamic threshold value.

4. Method according to Claim 2, comprising:
setting the holding time as a function of at least one operating parameter of the spark-ignition engine (220).

5. Method according to Claim 4, comprising:
wherein the at least one operating parameter as a function of which the holding time is set comprises a rotational speed and/or a load of the spark-ignition engine (220).

6. Method according to one of Claims 4 and 5, comprising:
- determining a difference between the retained injection time and an injection time which is determined instantaneously by the closed-loop control;
- comparing the difference with a difference threshold value; and
- ending the retaining of the injection time as a function of the comparison.

7. Method according to one of the preceding claims,
wherein the open-loop control of the injection time takes place as a function of a sign of the detected change in the at least one operating parameter over time.

8. Device for controlling a spark-ignition engine (220), comprising:
a monitoring module (20) for monitoring at least one operating parameter of the spark-ignition engine (220), wherein the monitoring module (20) is configured to detect a change in the at least one operating parameter over time which exceeds a dynamic threshold value;
a control module (30) which is configured to perform open-loop control of an injection time of the spark-ignition engine (220) as a function of the detected change in the at least one operating parameter over time; and
a holding time module (34) which determines a suitable holding time when a dynamic is present,
wherein the device for carrying out the method is configured according to one of Claims 1 to 7.

9. Motor vehicle (100) comprising:
a drive train (200) having a spark-ignition engine (220); and a device (240) for performing open-loop control of the spark-ignition engine (220), wherein the device is configured according to Claim 8.

## Revendications

1. Procédé de commande d'un moteur à quatre temps (220), comprenant :
- la surveillance d'au moins un paramètre de fonctionnement du moteur à quatre temps (220) ;
- la détection d'une variation dans le temps de l'au moins un paramètre de fonctionnement qui dépasse une valeur seuil dynamique ; et
- la commande d'un instant d'injection du moteur à quatre temps (220) en fonction de la variation détectée dans le temps de l'au moins un paramètre de fonctionnement,
- la régulation de l'instant d'injection en fonction de l'au moins un paramètre de fonctionnement ;
- lorsque l'on a détecté que la variation dans le temps de l'au moins un paramètre de fonctionnement dépasse la valeur seuil dynamique, la conservation de l'instant d'injection déterminé par la régulation pendant un temps de maintien et
- la poursuite du réglage de l'instant d'injection dès qu'un état de fonctionnement stationnaire du paramètre de fonctionnement s'est établi.

2. Procédé selon la revendication 1,
dans lequel l'au moins un paramètre de fonctionnement du moteur à quatre temps (220) qui est surveillé, comprend une vitesse de rotation et/ou une charge du moteur à quatre temps (220).

3. Procédé selon la revendication 1,
dans lequel le temps de maintien est plus long qu'un temps dynamique dans lequel l'au moins un paramètre de fonctionnement dépasse la valeur seuil dynamique.

4. Procédé selon la revendication 2 ; comprenant :
l'ajustement du temps de maintien en fonction d'au moins un paramètre de fonctionnement du moteur à quatre temps (220).

5. Procédé selon la revendication 4, comprenant :
dans lequel l'au moins un paramètre de fonctionnement en fonction duquel le temps de maintien est ajusté, comprend une vitesse de rotation et/ou une charge du moteur à quatre temps (220).

6. Procédé selon l'une quelconque des revendications 4 ou 5, comprenant :
- la détermination d'une différence entre l'instant d'injection conservé et un instant d'injection déterminé temporairement par la régulation ;
- la comparaison de la différence avec une valeur seuil de différence ; et
- en fonction de la comparaison, la terminaison de la conservation de l'instant d'injection.

7. Procédé selon l'une quelconque des revendications précédentes,
dans lequel la commande de l'instant d'injection s'effectue en fonction d'un signe de la variation détectée dans le temps de l'au moins un paramètre fonctionnel.

8. Dispositif de commande d'un moteur à quatre temps (220), comprenant :
un module de surveillance (20) pour surveiller au moins un paramètre de fonctionnement du moteur à quatre temps (220), le module de surveillance (20) étant configuré pour détecter une variation dans le temps de l'au moins un paramètre de fonctionnement qui dépasse une valeur seuil dynamique ;
un module de commande (30) qui est configuré pour commander un instant d'injection du moteur à quatre temps (220) en fonction de la variation détectée dans le temps de l'au moins un paramètre de fonctionnement ; et
un module de temps de maintien (34) qui détermine un temps de maintien approprié en présence d'une dynamique,
le dispositif étant configuré pour mettre en oeuvre le procédé selon l'une quelconque des revendications 1 à 7.

9. Véhicule automobile (100), comprenant :
une chaîne cinématique (200) avec un moteur à quatre temps (220) ; et
un dispositif (240) pour commander le moteur à quatre temps (220), le dispositif étant configuré selon la revendication 8.
